# EUROPEAN PATENT APPLICATION

(11) **EP 3 730 784 A1**
(43) Date of publication of application: **28.10.2020**
(21) Application number: 19171013.6
(22) Date of filing: 25.04.2019
(51) Int. Cl.: F03D 17/00, F03D 80/40, F03D 7/04

(54) **A METHOD FOR A COMPUTER-IMPLEMENTED ANALYSIS OF OPERATION DATA OF ONE OR MORE WIND TURBINES**

(71) Applicant: Siemens Gamesa Renewable Energy A/S, 7330 Brande (DK)
(72) Inventor: The designation of the inventor has not yet been filed
(74) Representative: Aspacher, Karl-Georg

(57) **Abstract**

The invention refers to a method for a computer-implemented analysis of operation data (OD) of one or more wind turbines (1), each wind turbine (1) comprising a rotor having several rotor blades (5) attached to a rotor shaft and each wind turbine (1) being configured to generate electric power based on the movement of the rotor blades (5) by wind, wherein
- the operation data (OD) are provided as digital data sets (DS), each data set (DS) comprising operating point data (OPD) present at an operating point (OP) of a wind turbine (1) and a surface state class (CL) to which the rotor blades (5) of the wind turbine (1) at the operating point (OP) belongs, where the operating point data (OPD) comprise a wind speed (WS) occurring at the wind turbine (1), a rotational speed (RS) of the rotor and a pitch angle (θ) of the rotor blades (5) and where the surface state class (CL) is a class out of a plurality of surface state classes (CL), each class (CL) of the plurality of surface state classes (CL) defining a surface state of the rotor blades (5);
- a data driven model (DM) is trained by machine learning (ML) using the data sets (DS) as training data, where the operating point data (OPD) of a respective data set (DS) is the input of the data driven model (DM) and the surface state class (CL) of the respective data set (DS) is the output of the data driven model (DM), thus resulting in a trained data driven model (TDM) capable to determine respective surface state classes (CL) based on respective operating point data (OPD).

## Description

The invention refers to a method for a computer-implemented analysis of operation data of one or more wind turbines.

The power output generated by a wind turbine mainly depends on the rotor of the turbine. Besides the swept area, the aerodynamic characteristics of the rotor and its blades have a strong influence with respect to the generated power at a given wind speed.

The aerodynamic characteristics of wind turbines are well-known and optimized in order to achieve a maximum power output. However, the aerodynamic properties change over the life time of the wind turbine. Particularly, soiling, icing and erosion of the rotor blades result in a significant power degradation and thus in less power output.

The controller of a wind turbine tries to compensate aerodynamic losses caused by the adverse effects of soiling, icing and erosion. Although this compensation will result in a lower power degradation, higher loads will act on the wind turbine, potentially resulting in failures, shorter life time, higher maintenance efforts and so on.

It is known to identify surface deteriorations of rotor blades by manual inspection. However, this causes high costs, especially in case of offshore wind parks.

To avoid manual inspection, soiling sensors have been developed. Those sensors are attached to the rotor blades in order to detect soiling on the blade surface. A soiling sensor which detects soiling based on air pressure differences is described in document WO 2018/149533 A1. The use of soiling sensors causes costs due to the price of the sensors and the complex integration of the sensors into the blade manufacturing process. Moreover, the installation of such sensors in wind turbines already in operation is too expensive.

Therefore, it is an object of the invention to determine the surface state of rotor blades of a wind turbine in an easy and inexpensive manner.

This object is solved by the independent patent claims. Preferred embodiments of the invention are defined in the dependent claims.

The method according to the invention provides a computer-implemented analysis of operation data of one or more wind turbines, each wind turbine comprising a rotor having several rotor blades attached to a rotor shaft and each wind turbine being configured to generate electric power based on the movement of the rotor blades by wind.

According to the invention, the operation data are provided as digital data sets. This means that the method has access to a digital storage where such operation data are stored. Each data set of the operation data comprises operating point data specifying an operating point of a wind turbine. Besides the operating point data, a corresponding data set comprises a surface state class to which the rotor blades of the wind turbine at the operating point belongs. The operating point data comprise a wind speed occurring at the wind turbine, a rotational speed of the rotor as well as a pitch angle of the rotor blades. The pitch angle is well-known for a skilled person and refers to the angle the blade is facing towards the wind. Furthermore, the surface state class included in a corresponding data set is a class out of plurality of surface state classes, each class of the plurality of surface state classes defining a surface state of the rotor blades. The operation data processed in the method of the invention comprise data sets for different surface state classes and particularly all surface state classes of the plurality of surface state classes.

In the method according to the invention, a data driven model is trained by machine learning using the above described data sets as training data, where the operating point data of a respective data set is the input of the data driven model and the surface state class of the respective data set is the output of the data driven model. Such a machine learning results in a trained data driven model capable to determine respective surface state classes based on respective operating point data.

The method of the invention enables a computer-implemented generation of a trained data driven model based on operation data. This trained data driven model can be used in order to determine an unknown surface state of rotor blades of a wind turbine without manual inspection and without the need to install sensors on the blade.

As mentioned above, the operating point data comprise a wind speed, a rotational speed of the rotor and a pitch angle of the rotor blades. In a preferred embodiment, the operating point data further comprise one or more of the following quantities:
- the generated electric power of the wind turbine;
- the mechanical load acting on the rotor of the wind turbine;
- the torque acting on the rotor shaft of the wind turbine;
- the power coefficient of the wind turbine;
- the thrust coefficient of the wind turbine;
- the lift coefficient of the wind turbine;
- the drag coefficient of the wind turbine.

The above coefficients are well-known for a skilled person and, thus, those coefficients are not explained in detail herein. The use of one or more of the above quantities resuits in a trained data driven model having a better prediction quality of the surface state class.

In another preferred embodiment of the invention, the plurality of surface state classes comprises classes defining different soiling degrees of the surface of the rotor blades and/or different icing degrees of the surface of the rotor blades and/or different erosion degrees of the surface of the rotor blades.

In an easy implementation of the above embodiment, the soiling degree is exclusively specified by two classes, one class defining that the rotor blades are soiled and another class defining that the rotor blades are not soiled. Additionally or alternatively, the icing degree is exclusively specified by two classes, one class defining that the rotor blades are iced and another class defining that the rotor blades are not iced. Additionally or alternatively, the erosion degree is exclusively specified by two classes, one class defining that the surface of the rotor blades is eroded and another class defining that the rotor blades is not eroded. However, it is also possible to define more than the above classes referring e.g. to states of medium soiling, icing or erosion.

In another embodiment of the invention, the operation data comprise simulated data from a wind turbine simulation. I.e., at least a part of the data sets of the operation data refers to a simulated wind turbine. Alternatively or additionally, the operation data comprise data acquired from the operation of a real wind turbine. Preferably, the surface state class of one or more data sets of the operation data is derived from sensor data of a number of soiling sensors attached to one or more rotor blades of the real wind turbine. E.g., the sensor as disclosed in the above mentioned document WO 2018/149533 A1 may be used as a soiling sensor. Contrary to the prior art, only selected wind turbines have to be analyzed in advance for providing training data used for machine learning. Afterwards, the trained data driven model can be used for determining the surface states of rotor blades without using sensors or without manual inspection.

In another preferred variant of the invention, the data driven model comprises a support-vector machine classifier and/or a decision tree classifier. Particularly, the decision tree classifier is a random forest classifier. In a preferred embodiment, a special variant of a random forest classifier, namely the extra trees classifier (also designated as "extremely randomized trees") is used as a data driven model. All those classifiers are well-known for a skilled person. In another embodiment of the invention, the data driven model comprises a neural network structure with one or more artificial neural networks.

Besides the above method, the invention refers to a method for computer-implemented monitoring of the operation of a wind turbine. This method is based on a data driven model which has been trained by the above described method of a computer-implemented analysis. However, the above described method of a computer-implemented analysis may also be part of the monitoring method. In this case, the training of the data driven model is part of the monitoring.

In the method for computer-implemented monitoring, operating point data of the wind turbine are acquired at one or more time points, i.e. the above data sets comprising the wind speed, the rotational speed of the rotor and the pitch angle of the rotor blades are detected during operation of the wind turbine. In a next step, the operating point data at a respective time point are input to the trained data driven model, resulting in an output of a surface state class. Hence, this method determines the surface state of rotor blades by just using a trained data driven model.

In a preferred embodiment of the above method, the output of the surface state class is provided as an output of a user interface, e.g. via a display. Hence, a human operator is informed without delay about a deterioration of the rotor blades. Alternatively or additionally, the output of the surface state class may be stored in a digital storage, the content of which is analyzed at a later date.

Besides the above methods, the invention refers to an apparatus for a computer-implemented analysis of operation data of one or more wind turbines where the apparatus is configured to perform the above method for computer-implemented analysis or one or more preferred embodiments thereof.

Furthermore, the invention refers to an apparatus for computer-implemented monitoring of the operation of a wind turbine where the apparatus is configured to perform the above method for computer-implemented monitoring or one or more preferred embodiments thereof.

Moreover, the invention refers to a computer program product with program code, which is stored on a non-transitory machine-readable carrier, for carrying out the above method for a computer-implemented analysis or the above method for computer-implemented monitoring or one or more preferred embodiments thereof when the program code is executed on a computer.

Furthermore, the invention refers to a computer program with program code for carrying out the above method for a computer-implemented analysis or the above method for computer-implemented monitoring or preferred embodiments thereof when the program code is executed on a computer.

In the following, embodiments of the invention will be described in detail with respect to the accompanying drawing wherein:
- Fig. 1: shows a wind turbine in a side view where the operation data of this wind turbine are processed according to an embodiment of the invention;
- Fig. 2: shows the wind turbine of Fig. 1 in a front view;
- Fig. 3: shows a section of one blade of the wind turbine of Fig. 1 where a soiling sensor is installed on the blade;
- Fig. 4: shows a flow chart illustrating the steps performed in an embodiment of the invention; and
- Fig. 5: shows a diagram illustrating a method for operating a wind turbine based on the trained data driven model generated by the method shown in Fig. 4.

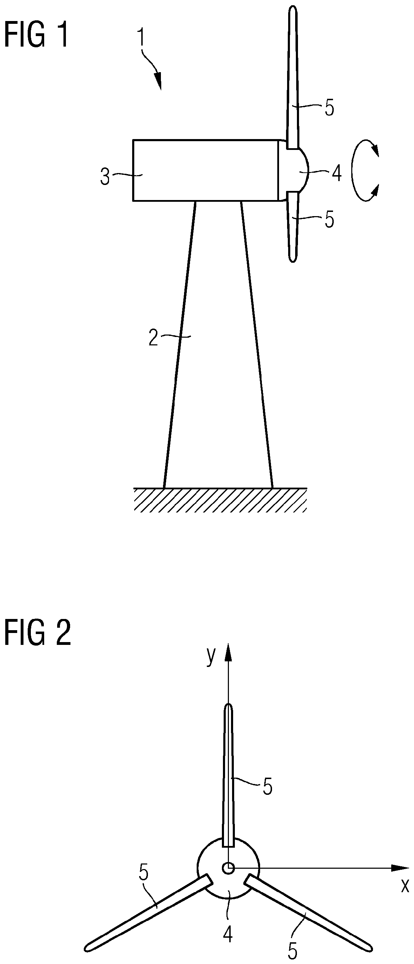

In the following, the invention will be described based on operation data of a real wind turbine which is shown in Fig. 1. Nevertheless, the invention may also be used for operation data produced by a wind turbine simulation. Furthermore, the operation data may originate not just from one wind turbine, but also from several real and/or simulated wind turbines.

Fig. 1 shows a side view of the wind turbine 1 comprising a tower 2 on the top of which the nacelle 3 of the turbine is arranged. The nacelle comprises an electric machine (not shown) being driven by a rotor having a hub 4 at which three rotor blades 5 (see Fig. 2) are attached. A rotor shaft (not shown) extends from the hub 4 into the nacelle 3.

Fig. 2 shows a front view of the wind turbine of Fig. 1. The horizontal direction is indicated in Fig. 2 by the x-axis and the vertical direction by the y-axis. Adjacent rotor blades 5 have an angular distance of 120°. The rotor blades can change their so-called pitch angle which is the angle the respective blade is facing towards the wind. This is the angle around the longitudinal axis of each rotor blade. For the blade extending in the vertical direction in Fig. 2, the pitch angle is the angle around the y-axis.

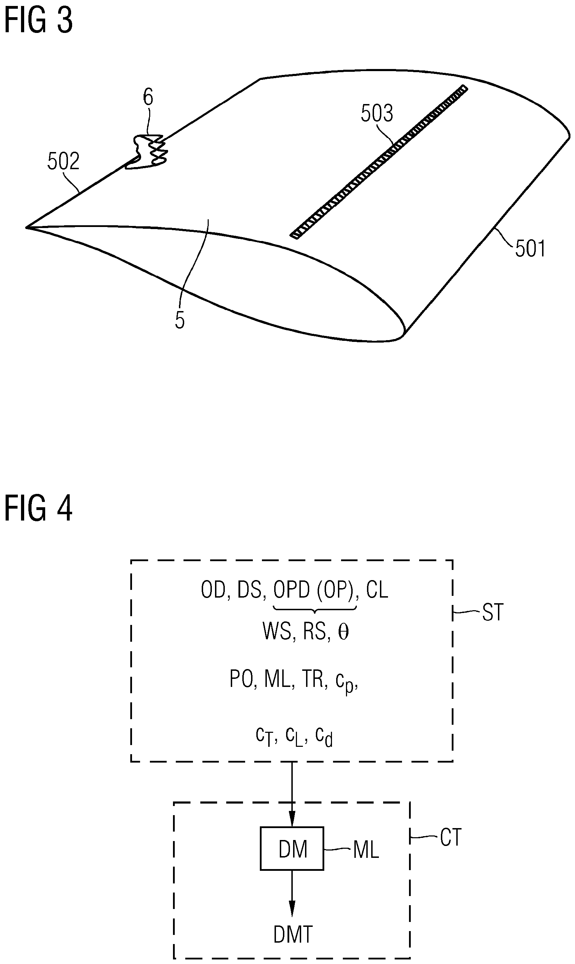

Fig. 3 shows in a perspective view a section of one rotor blade 5. The rotor blade has a leading edge 501 as well as a trailing edge 502. Furthermore, as customary in the art, a stripe of vortex generators 503 is arranged across the surface of the rotor blade and in parallel with the leading edge 501. Moreover, a soiling sensor 6 is disposed adjacent to the trailing edge 502 of the rotor blade. This soiling sensor is state of the art and described in detail in document WO 2018/149533 A1. The soiling sensor measures a plurality of pressure values corresponding to a plurality of different heights above the trailing edge of the rotor blade. Based on those pressure values, the soiling state of the surface of the rotor blade can be determined. The soiling states are divided into several classes representing the soiling degree of the blade. The classes are processed in an embodiment of the invention, as will be described in the following. It is assumed that the soiling state determined by the sensor 6 is the same for all rotor blades of the wind turbine.

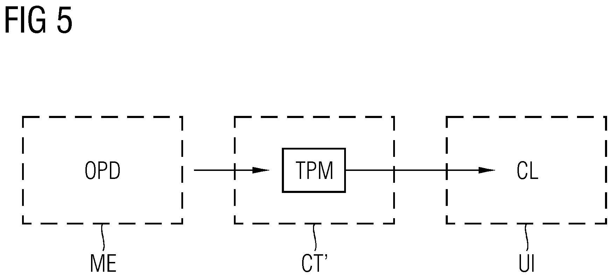

Fig. 4 shows an embodiment of the invention used for analyzing operation data of the turbine in Fig. 1. Rectangles indicated by dashed lines in Fig. 4 and in Fig. 5 refer to corresponding means for performing the respective step enclosed by the corresponding rectangle. The method of Fig. 4 has access to a digital storage ST where operation data OD having been collected during the operation of the wind turbine 1 are stored. The operation data are provided as digital data sets DS, where each data set comprises operating point data OPD present at an operating point OP of the wind turbine 1 (i.e. at a time point during operation) as well as a class CL to which the rotor blades of the wind turbine at the respective operating point belongs.

The class CL is a class out of several classes, where the classes describe the soiling degree of the rotor blades which is measured by the sensor 6 of Fig. 3 at the respective operation point. The classes may e.g. refer to a surface state of the rotor blades with no soiling, a surface state with moderate soiling and a surface state with high soiling. More detailed categories may also be chosen. In a straightforward implementation of the invention, the plurality of classes just include one class referring to a non-soiled surface state of the rotor blades and another class referring to a soiled surface state of the rotor blades.

Instead of determining the soiling state by a sensor, a soiling state for the respective operating point may also be determined by a visual inspection of the rotor blade. Furthermore, other classes than soiling or additional classes may be chosen for the surface states of the rotor blades, e.g. classes referring to the icing of the surface of the rotor blades and/or classes referring to the erosion of the surface of the rotor blades.

The operating point data OPD refer to operating conditions at the respective operating point OP. In the embodiment described herein, the operating point data comprise the wind speed WS occurring at the wind turbine, the rotor speed RS of the rotor as well as the pitch angle θ of the rotor blades of the rotor. Optionally, the operating point data OPD may include further parameters present at the operating point OP. Examples of those further parameters are the generated electric power PO of the wind turbine, the mechanical load ML acting on the rotor of the wind turbine, the torque TR acting of the rotor shaft of the wind turbine, the power coefficient C_{P} of the wind turbine, the thrust coefficient C_{T} of the wind turbine, the lift coefficient C_{L} of the wind turbine and the drag coefficient C_{d} of the wind turbine. The above coefficients are well-known for a skilled person.

According to the embodiment of Fig. 4, the operation data OD which are collected in advance and stored in the storage ST are used by a computer CT as training data for a machine learning method ML which trains a data driven model DM. A training data set comprises the operating point data OPD and the corresponding class CL at the respective operating point OP. Based on a plurality of those training data sets, the data driven model DM is learned by the machine learning method ML where the operating point data OPD form the input of the data driven model and the respective classes CL form the output of the data driven model. Well-known data driven models and associated machine learning methods may be used for training. In one embodiment, a classifier based on decision trees, e.g. a random forest classifier, is used as a data driven model. In another embodiment, a neural network structure comprising one or more artificial neural networks is used as a data driven model. Any other known data driven model may be implemented in the method of Fig. 4.

At the end of the training, a trained data driven model TDM is obtained which is capable of determining classes representing soiling degrees for an arbitrary wind turbine based on operating point data of this turbine. In other words, the trained data driven model TDM enables the monitoring of the surface soiling state of the blades of a wind turbine based on operating point data without using soiling sensors and without the need of visual inspections. This is because the trained data driven model TDM can predict this soiling state. The soiling state is an important quantity during the operation of a wind turbine because soiling of the rotor blades leads to a deterioration of the power output of the wind turbine. Hence, in case that soiled rotor blades are determined, appropriate counter measures, e.g. cleaning of the rotor blades or a replacement of the rotor blades, may be taken.

Fig. 5 shows a method for monitoring a wind turbine based on the trained data driven model TDM as obtained by the method of Fig. 4. Based on a measurement equipment ME, operating point data OPD having the same quantities as the operating point data in the method of Fig. 4 are acquired. In other words, at respective operating points, the wind speed WS at the monitored wind turbine, the rotor speed RS of the monitored wind turbine as well as the pitch angle θ of the rotor blades of the monitored wind turbine are acquired. Optionally, one or more of the above additional parameters PO, ML, TR, C_{P}, C_{T}, C_{L} and C_{d} may be acquired for the monitored wind turbine as well.

The operating point data OPD are processed in the method of Fig. 5 by a computer CT' which provides the trained data driven model TDM. In other words, the operating point data OPD obtained by the measurement equipment ME are input into the trained data driven model TDM. As a result, a soiling class CL of the rotor blades is predicted by the trained data driven model TDM. This class is output by a user interface UI, e.g. as a visual output on a display. As a consequence, a human operator of the wind turbine is informed about the surface state of the rotor blades.

The invention as described in the foregoing has several advantageous. Particularly, there is no need to install sensors for sensing the surface state of a wind turbine during monitoring of the operation of the wind turbine. Such sensors may only be used in order to acquire training data for training a data driven model. Instead of using sensors, the surface state of a turbine is predicted by a trained data driven model. The data driven model is trained by supervised machine learning due to the fact that the training data include classes to be predicted after learning. The use of supervised machine learning results in a high prediction quality in comparison to unsupervised machine learning.

## Claims

1. A method for a computer-implemented analysis of operation data (OD) of one or more wind turbines (1), each wind turbine (1) comprising a rotor having several rotor blades (5) attached to a rotor shaft and each wind turbine (1) being configured to generate electric power based on the movement of the rotor blades (5) by wind, wherein
- the operation data (OD) are provided as digital data sets (DS), each data set (DS) comprising operating point data (OPD) present at an operating point (OP) of a wind turbine (1) and a surface state class (CL) to which the rotor blades (5) of the wind turbine (1) at the operating point (OP) belongs, where the operating point data (OPD) comprise a wind speed (WS) occurring at the wind turbine (1), a rotational speed (RS) of the rotor and a pitch angle (θ) of the rotor blades (5) and where the surface state class (CL) is a class out of a plurality of surface state classes (CL), each class (CL) of the plurality of surface state classes (CL) defining a surface state of the rotor blades (5), where the operation data (OD) comprise data sets (DS) for different surface state classes (CL) of the plurality of surface state classes (CL);
- a data driven model (DM) is trained by machine learning (ML) using the data sets (DS) as training data, where the operating point data (OPD) of a respective data set (DS) is the input of the data driven model (DM) and the surface state class (CL) of the respective data set (DS) is the output of the data driven model (DM), thus resulting in a trained data driven model (TDM) capable to determine respective surface state classes (CL) based on respective operating point data (OPD).

2. The method according to claim 1, wherein the operating point data further comprise one of more of the following quantities:
- the generated electric power (PO) of the wind turbine (1);
- the mechanical load (ML) acting on the rotor;
- the torque (TR) acting on the rotor shaft;
- the power coefficient (C_{P}) of the wind turbine (1);
- the thrust coefficient (C_{T}) of the wind turbine (1);
- the lift coefficient (C_{L}) of the wind turbine (1);
- the drag coefficient (C_{d}) of the wind turbine (1).

3. The method according to claim 1 or 2, wherein the plurality of surface state classes (CL) comprises classes (CL) defining different soiling degrees of the surface of the rotor blades (5) and/or different icing degrees of the surface of the rotor blades (5) and/or different erosion degrees of the surface of the rotor blades (5).

4. The method according to claim 3, wherein the soiling degree is exclusively specified by two classes (CL), one class (CL) defining that the surface of the rotor blades (5) is soiled and another class (CL) defining that the surface of the rotor blades (5) is not soiled, and/or wherein the icing degree is exclusively specified by two classes (CL), one class (CL) defining that the surface of the rotor blades (5) is iced and another class (CL) defining that the surface of the rotor blades (5) is not iced, and/or wherein the erosion degree is exclusively specified by two classes (CL), one class (CL) defining that the surface of the rotor blades (5) is eroded and another class (CL) defining that the surface of the rotor blades (5) is not eroded.

5. The method according to one of the preceding claims, wherein the operation data (OD) comprise simulated data from a wind turbine simulation.

6. The method according to one of the preceding claims, wherein the operation data (OPD) comprise data acquired from the operation of a real wind turbine (1).

7. The method according to claim 6 in combination with claim 3 or 4, wherein the surface state class (CL) of one or more data sets of the operation data (OD) is derived from sensor data of a number of soiling sensors (6) attached to one or more rotor blades (5) of the real wind turbine (1).

8. The method according to one of the preceding claims, wherein the data driven model (DM) comprises a support-vector machine classifier and/or a decision tree classifier, preferably a random forest classifier or an extra trees classifier.

9. The method according to one of the preceding claims, wherein the data driven model (DM) comprises a neural network structure with one or more artificial neural networks.

10. A method for computer-implemented monitoring of the operation of a wind turbine (1) based on a data driven model (TDM) being trained or having been trained by a method according to one of claims 1 to 9, wherein
- operating point data (OPD) of the wind turbine (1) are acquired at one or more time points;
- the operating point data (OPD) at a respective time point are input to the trained data driven model (TDM), resulting in an output of a surface state class (CL).

11. The method according to claim 10, wherein the output of the surface state class (CL) is provided as an output of a user interface (UI).

12. An apparatus for a computer-implemented analysis of operating data (OD) of one or more wind turbines (1), each wind turbine comprising a rotor having several rotor blades (5) attached to a rotor shaft and being configured to generate electric power based on the movement of the rotor blades (5) by wind, where the apparatus comprises
- a means (ST) for providing the operation data (OD) as digital data sets (DS), each data set (DS) comprising operating point data (OPD) specifying an operating point (OP) of a wind turbine (1) and a surface state class (CL) to which the rotor blades (5) of the wind turbine (1) at the operating point (OP) belongs, where the operating point data (OPD) comprise a wind speed (WS) occurring at the wind turbine (1), a rotational speed (RS) of the rotor and a pitch angle (θ) of the rotor blades (5) and where the surface state class (CL) is a class out of a plurality of surface state classes (CL), each class (CL) of the plurality of surface state classes (CL) defining a surface state of the rotor blades (5), where the operation data (OD) comprise data sets (DS) for different surface state classes (CL) of the plurality of surface state classes (CL);
- a means (CT) for training a data driven model (DM) by machine learning (ML) using the data sets (DS) as training data, where the operating point data (OPD) of a respective data set (DS) is the input of the data driven model (DM) and the surface state class (CL) of the respective data set (DS) is the output of the data driven model (DM), thus resulting in a trained data driven model (TDM) capable to determine respective surface state classes (CL) based on respective operating point data (OPD).

13. The apparatus according to claim 12, wherein the apparatus is configured to perform a method according to one of claims 2 to 9.

14. An apparatus for computer-implemented monitoring of the operation of a wind turbine (1) based on a data driven model (TDM) being trained or having been trained by a method according to one of claims 1 to 8, comprising
- a means (ME) for acquiring operating point data (OPD) of the wind turbine (1) at one or more time points,
- a means (CT') for processing the operating point data (OPD) at a respective time point as input in the trained data driven model (TDM), resulting in an output of a surface state class (CL).

15. The apparatus according to claim 14, wherein the apparatus comprises a user interface (UI) for outputting the surface state class (CL).

16. A computer program product with program code, which is stored on a non-transitory machine-readable carrier, for carrying out a method according to one of claims 1 to 11 when the program code is executed on a computer.

17. A computer program with program code for carrying out a method according to one of claims 1 to 11 when the program code is executed on a computer.
